(19) Europäisches Patentamt / European Patent Office / Office européen des brevets

(11) **EP 4 338 821 A1**

(12) **EUROPEAN PATENT APPLICATION**
published in accordance with Art. 153(4) EPC

(43) Date of publication:
**20.03.2024 Bulletin 2024/12**

(21) Application number: **22807562.8**

(22) Date of filing: **13.05.2022**

(51) International Patent Classification (IPC):
**B01D 61/44** (2006.01)   **B01D 61/46** (2006.01)
**C25B 7/00** (2006.01)   **C02F 1/469** (2023.01)
**C25B 13/04** (2021.01)   **C25B 13/07** (2021.01)
**C25B 9/00** (2021.01)   **C25B 15/023** (2021.01)
**C25B 15/08** (2006.01)   **C25B 1/16** (2006.01)

(52) Cooperative Patent Classification (CPC):
**B01D 61/44; B01D 61/46; C02F 1/469; C25B 1/16;
C25B 7/00; C25B 9/00; C25B 13/04; C25B 13/07;
C25B 15/023; C25B 15/08**

(86) International application number:
**PCT/JP2022/020226**

(87) International publication number:
**WO 2022/239864 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.05.2021   JP 2021082480**

(71) Applicant: HIROSAKI UNIVERSITY
**Hirosaki-shi, Aomori 036-8560 (JP)**

(72) Inventors:
• **SASAKI Kazuya**
  **Hirosaki-shi, Aomori 036-8560 (JP)**
• **SHINMURA Kiyoto**
  **Hirosaki-shi, Aomori 036-8560 (JP)**

(74) Representative: **Simmons & Simmons LLP
(Munich)
Lehel Carré
Thierschplatz 6
80538 Munich (DE)**

(54) **LITHIUM RECOVERY DEVICE AND LITHIUM RECOVERY METHOD**

(57)   A lithium recovery device 10 which is equipped with a processing tank 1 partitioned into a supply tank 11 and a recovery tank 12 by a lithium ion-conducting electrolyte film 2, and which, in order to selectively move $Li^+$ to an aqueous solution AS in the recovery tank 12 from an aqueous solution SW in the supply tank 11 containing $Li^+$ and metal ions $M^{n+}$ which are different therefrom, is also equipped with a first power supply 51 which is connected between porous-structure electrodes 31, 32 provided so as to respectively contact both surfaces of the electrolyte film 2 with the electrode 31 on the supply tank 11 side as the positive electrode, and a second power supply 52 which connects in series to the negative electrode of the first power supply 51 and in which said negative electrode is connected to a sub-electrode 33 provided at a distance from the electrolyte film 2 inside the recovery tank 12, wherein the second power supply 52 applies a voltage so as to cause a current to flow from the positive electrode to the electrode 32.

EP 4 338 821 A1

**Description**

**TECHNICAL FIELD**

The present invention relates to a lithium recovery device and a lithium recovery method for selectively recovering lithium ions from an aqueous solution.

**BACKGROUND ART**

Lithium (Li) is a resource in high demand as a raw material for lithium-ion secondary batteries, a fuel for nuclear fusion reactors, and the like. There is a need for a less expensive that can provide a stable supply of lithium. Stable sources of Li include seawater and the like with Li dissolved in the form of cations. A positive electrode of a lithium-ion secondary battery mainly contains Li in the form of lithium cobalt oxide ($LiCoO_2$), leading to expectations for a less expensive recovery technology from batteries discarded due to the end of battery life or the like. Although adsorption methods have heretofore been used to recover Li from seawater and the like, recovery through electrodialysis using a lithium ion-conducting electrolyte film has been developed as a more selective method (for example, Patent Literature 1 and Non-Patent Literature 1).

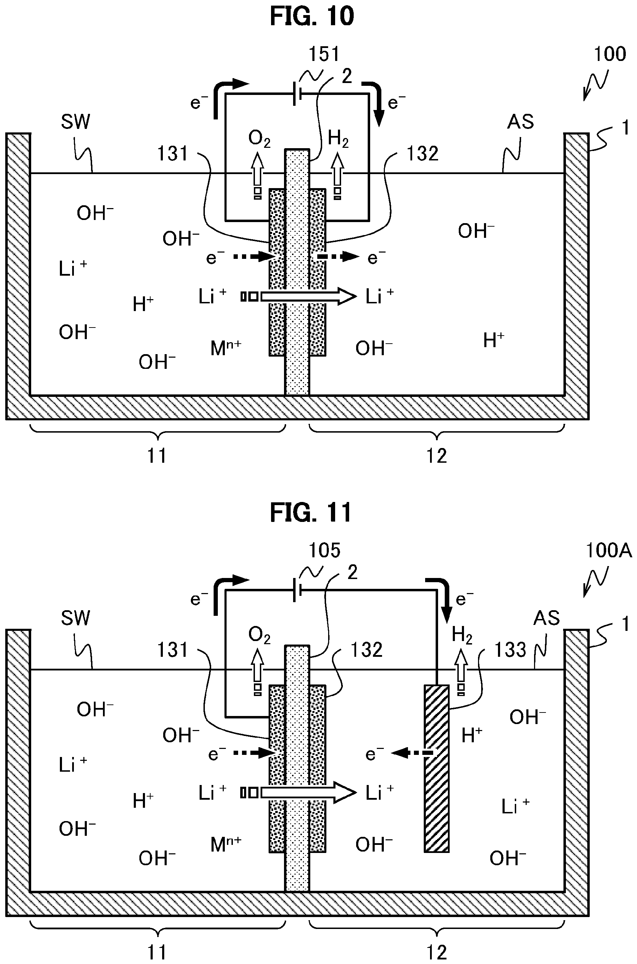

A method for recovering Li through electrodialysis will be described with reference to FIG. 10. A lithium recovery device 100 is equipped with a processing tank 1 partitioned into a supply tank 11 and a recovery tank 12 by a lithium ion-conducting electrolyte film (hereinafter referred to as an electrolyte film) 2. The lithium recovery device 100 is also equipped with a power supply 151 connected between an electrode 131 in the supply tank 11 and an electrode 132 in the recovery tank 12 with the electrode 131 as a positive electrode. A Li-containing aqueous solution SW such as seawater is charged into the supply tank 11 as a Li source, and a Li recovery aqueous solution AS such as pure water is charged into the recovery tank 12. Voltage application by the power supply 151 causes the reaction of Formula (1) below near the electrode 131 in the Li-containing aqueous solution SW in the supply tank 11, thus generating oxygen ($O_2$) and reducing hydroxide ions (OH-) as negative ions. To maintain the charge balance, the reaction of Formula (2) below is caused in which $Li^+$ in a Li-containing aqueous solution FS migrate into the electrolyte film 2. On the other hand, in the Li recovery aqueous solution AS in the recovery tank 12, the reaction of Formula (3) below occurs near the electrode 132, thus generating hydrogen ($H_2$) and increasing OH-. This causes the reaction of Formula (4) below in which $Li^+$ in the electrolyte film 2 migrates into the Li recovery aqueous solution AS. In each formula, $Li^+$ contained in the electrolyte film 2 (electrolyte) is expressed as $Li^+$ (electrolyte). An electrochemical potential difference of $Li^+$ contained in the Li-containing aqueous solution SW, the electrolyte film 2, and the Li recovery aqueous solution AS causes $Li^+$ to permeate the electrolyte film 2 from the Li-containing aqueous solution SW and migrate into the Li recovery aqueous solution AS. The electrolyte film 2 does not allow metal ions $M^{n+}$ other than $Li^+$ contained in the Li-containing aqueous solution SW, such as $Na^+$ and $Ca^{2+}$ with a larger diameter than $Li^+$ to permeate therethrough, since the size of its lattice defect site is small. This selectively moves $Li^+$ from the Li-containing aqueous solution SW to the Li recovery aqueous solution AS, thus obtaining a $Li^+$ aqueous solution (lithium hydroxide (LiOH) aqueous solution) in the recovery tank 12.

[Chem. 1]

$$2OH^- \rightarrow H_2O + \frac{1}{2}O_2 \uparrow + 2e^- \quad \cdots (1)$$

$$Li^+ \rightarrow Li^+(electrolyte) \qquad \cdots (2)$$

$$2H_2O + 2e^- \rightarrow 2OH^- + H_2 \uparrow \cdots (3)$$

$$Li^+(electrolyte) \rightarrow Li^+ \qquad \cdots (4)$$

In the recovery through electrodialysis, the larger the electron e- migration amount per hour from the Li-containing aqueous solution SW to the electrode 131 and from the electrode 132 to the Li recovery aqueous solution AS, the faster the reactions of Formulas (1) and (3) and the larger the $Li^+$ migration amount per hour. To form an electric field in a thickness direction within the electrolyte film 2, the electrodes 131 and 132 are preferably provided in contact with the electrolyte film 2 (Patent Literature 1) and have a porous structure such as a net so that the aqueous solutions SW and AS come into contact with the electrolyte film 2. However, when the voltage of the power supply 151 is increased in an attempt to increase the electron e- migration amount per hour, the $Li^+$ migration amount per hour actually stops increasing after the voltage reaches a certain value. This is considered to be because the electrolyte film 2 reaches a potential at which some of the metal ions constituting the electrolyte are reduced due to the voltage applied to both surfaces thereof, thereby also conducting electrons e⁻. When such a voltage is applied, the electrolyte film 2 moves some of the electrons e⁻ supplied to the electrode 132 from the negative electrode of the power supply 151 to the electrode 131. As a result, even when the electron e⁻ migration amount per hour from the electrode 131 to the electrode 132 through the power supply 151 increases due to an increase in the applied voltage, the electron e⁻ migration amount per hour does not increase that much between the aqueous solution SW and the electrode 131, and between the electrode 132 and the aqueous solution AS. Therefore, the electron $Li^+$ migration amount per hour does not increase as much as the applied voltage increases. In addition, energy efficiency deteriorates due to Joule heat power generation by electrons e⁻ conducted through the electrolyte film 2. Therefore, it can be said that this recovery method has a limitation in improvement in productivity.

Therefore, to prevent the electrolyte film from developing electron conductivity, the inventors of the present invention have developed a technology to suppress a potential difference between both surfaces of the electrolyte film by forming a circuit with electrodes spaced apart from the electrolyte film without applying a voltage for electrodialysis from both surfaces of the electrolyte film (Patent Literature 2). As shown in FIG. 11, a lithium recovery device 100A includes an electrode 133 spaced apart from an electrolyte film 2 in a recovery tank 12, and this electrode 132 and an electrode 131 attached to the surface of the electrolyte film 2 on the supply tank 11 side are connected to a power supply 105 as a pair. According to such a configuration, even when the voltage of the power supply 105 is increased to a certain level, the potential of the surface of the electrolyte film 2 on the recovery tank 12 side does not decrease significantly with respect to the surface on the supply tank 11 side. Therefore, the electrolyte film 2 does not exhibit electron conductivity.

**CITATION LIST**

**Patent Literature**

Patent Literature 1: Japanese Patent No. 6233877
Patent Literature 2: JP2019-141807A

**Non-Patent Literature**

Non-Patent Literature 1: Kunugi S., Inaguma Y., Itoh M., "Electrochemical recovery and isotope separation of lithium ion employing lithium ion conductive perovskite-type oxides", Solid State Ionics, Vol. 122, Issues 1-4, pp. 35-39, July 1999

**SUMMARY OF INVENTION**

**Technical Problem**

In the recovery method described in Patent Literature 2, when the voltage of the power supply 105 is increased to a certain level of applied voltage or higher to further increase the recovery rate of $Li^+$, the amount of $O_2$ and $H_2$ generated by water electrolysis increases more rapidly than the $Li^+$ recovery rate, resulting in a decrease in energy efficiency. Furthermore, the surface of the electrolyte film 2 on the recovery tank 12 side has a large voltage drop with respect to the electrode 131, causing the electrolyte film 2 to develop electron conductivity. Alternatively, the power supply 105 can be configured as two power supplies connected in series, and the power supply on the positive electrode side can be connected between the electrodes 131 and 132 attached to both surfaces of the electrolyte film 2. The power supply on the positive electrode side fixes the potential difference between both surfaces of the electrolyte film 2 below the reduction potential of the metal ions constituting the electrolyte film 2. This makes it possible to prevent the electrolyte film 2 from developing electron conductivity and to suppress a rapid increase in the amount of $O_2$ and $H_2$ generated. However, the potential difference between both surfaces of the electrolyte film 2 is limited to a certain level or less. Therefore, even when the total applied voltage is increased, there is an upper limit to the $Li^+$ migration amount per hour in the electrolyte film 2. Therefore, these recovery methods have room for improvement in terms of productivity improvement.

The present invention has been made in view of the above problems, and an object thereof is to provide a lithium recovery method and a lithium recovery device with high selectivity and productivity using electrodialysis.

**Solution to Problem**

Through intensive research, the inventors of the present invention have come up with formation of a circuit with an electrode that has a lower potential on the negative electrode side and is spaced apart from an electrolyte film so that the electrolyte film does not exhibit electron conductivity even when there is a large potential difference between both surfaces.

Specifically, a lithium recovery device according to the present invention is a device including a processing tank partitioned into a first tank and a second tank, in which lithium ions are moved from an aqueous solution containing lithium ions stored in the first tank to water or an aqueous solution stored in the second tank. The lithium recovery device according to the present invention includes: a lithium ion-conducting electrolyte film that partitions the processing tank; porous-structure electrodes provided in contact with both surfaces of the lithium ion-conducting electrolyte film; a sub-electrode provided in the second tank so as to be spaced apart from the porous-structure electrodes and the lithium ion-conducting electrolyte film; a first power supply connected between the porous-structure electrodes with the first tank side as a positive electrode; and a second power supply which connects in series to a negative electrode of the first power supply and has a negative electrode connected to the sub-electrode, wherein upon voltage application from the first power supply and the second power supply, no current flows to the porous-structure electrode on the second tank side or a current flows from a positive electrode of the second power supply.

A lithium recovery method according to the present invention is a method for moving lithium ions, in a processing tank partitioned into a first tank and a second tank, from an aqueous solution containing lithium ions stored in the first tank to water or an aqueous solution stored in the second tank. In the lithium recovery method according to the present invention, a voltage is applied by a first power supply connected between porous-structure electrodes, which are provided in contact with both surfaces of the lithium ion-conducting electrolyte film, with the first tank side as a positive electrode and a second power supply which connects in series to a negative electrode of the first power supply and has a negative electrode connected to a sub-electrode provided in the second tank so as to be spaced apart from the lithium ion-conducting electrolyte film, so that no current flows to the porous-structure electrode provided on the second tank side or a current flows from a positive electrode of the second power supply.

**Advantageous Effects of Invention**

The lithium recovery device and the lithium recovery method according to the present invention make it possible to selectively and quickly recover lithium also from an aqueous solution such as seawater in which lithium is present at an extremely low concentration and coexists with other metal ions, thereby improving productivity and preventing degradation of energy efficiency.

**BRIEF DESCRIPTION OF DRAWINGS**

FIG.1 is a schematic diagram showing a configuration of a lithium recovery device according to an embodiment of the present invention.
FIG. 2 is a schematic diagram of the lithium recovery device shown in FIG. 1, for explaining a lithium recovery method according to the embodiment of the present invention.
FIG. 3 is a circuit diagram of the lithium recovery device shown in FIG. 1, for explaining the lithium recovery method according to the embodiment of the present invention.
FIG. 4 is a schematic diagram for explaining a configuration of a lithium recovery device and a lithium recovery method according to a modification of the embodiment of the present invention.
FIG. 5 is a graph showing dependence of lithium migration amount per hour on a voltage applied between both surfaces of a lithium ion-conducting electrolyte film in an example.
FIG. 6 is a graph showing dependence of lithium migration amount per hour and current on a voltage applied between the surface of the lithium ion-conducting electrolyte film and a sub-electrode on the second tank side in the example.
FIG. 7 is a graph showing input power dependence of the lithium migration amount per hour in the example.
FIG. 8A is a graph showing total voltage dependence of energy efficiency of lithium migration in example.
FIG. 8B is a graph showing input power dependence of the energy efficiency of lithium migration in the example.
FIG. 9 is a graph showing temperature dependence of the lithium migration amount per hour in the example.
FIG. 10 is a schematic diagram of a lithium recovery device for explaining a lithium recovery method of the related art using electrodialysis.
FIG. 11 is a schematic diagram of a lithium recovery device for explaining a lithium recovery method of the related art using electrodialysis.

## DESCRIPTION OF EMBODIMENTS

Hereinafter, embodiments of a lithium recovery device and a lithium recovery method according to the present invention will be described with reference to the drawings.

[Lithium Recovery Device]

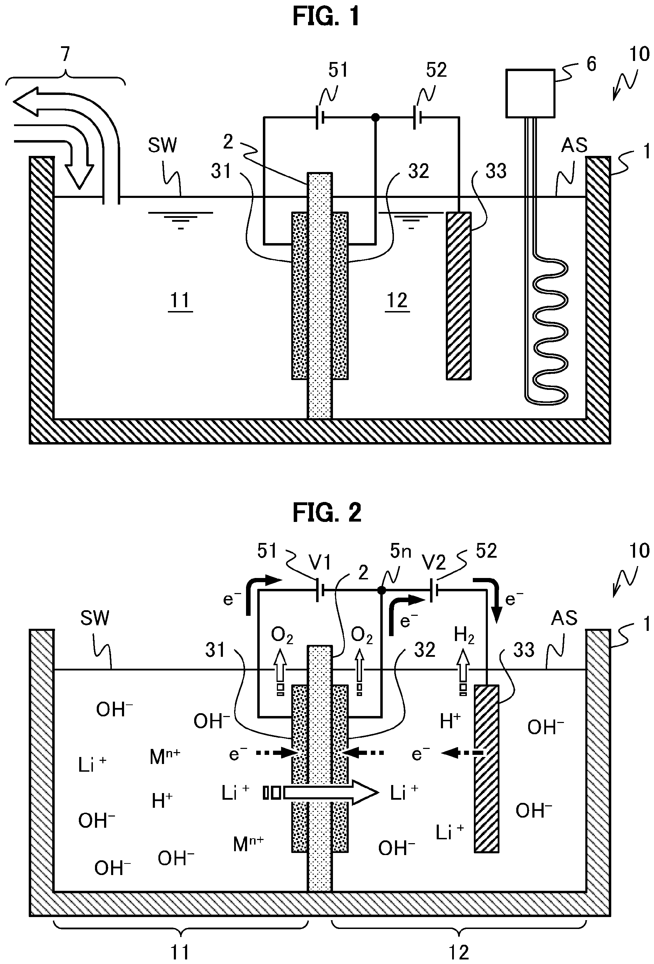

As shown in FIG. 1, a lithium recovery device 10 according to an embodiment of the present invention includes a processing tank 1, an electrolyte film (lithium ion-conducting electrolyte film) 2 that partitions the processing tank 1, a first electrode 31 and a second electrode 32 attached onto each surface of the electrolyte film 2 , a third electrode (sub-electrode) 33 , a first power supply 51 and a second power supply 52 connected in series, a heating device 6 , and a circulation device (circulator means) 7. The processing tank 1 is partitioned by the electrolyte film 2 into two tanks, including a supply tank (first tank) 11 that stores a Li-containing aqueous solution SW such as seawater, and a recovery tank (second tank) 12 that stores an aqueous solution AS for Li recovery. The third electrode 33 is provided spaced apart from the electrolyte film 2 in the recovery tank 12. The first power supply 51 has a positive (+) electrode connected to the first electrode 31 and a negative (-) electrode connected to the second electrode 32. The second power supply 52 connects in series to the negative electrode of the first power supply 51, that is, has a positive electrode connected to the second electrode 32 and a negative electrode connected to the third electrode 33. Therefore, the lithium recovery device 10 according to this embodiment has a configuration different from that of a lithium recovery device of the related art using electrodialysis (for example, a lithium recovery device 100 shown in FIG. 10) in further including the second power supply 52 connected in series to the negative electrode of the first power supply 51 (power supply 151 in FIG. 10) and the third electrode 33 connected to the negative electrode. Hereinafter, components of the lithium recovery device according to the embodiment of the present invention will be described.

The processing tank 1 is made of a material that does not undergo deterioration such as corrosion even when coming into contact with the Li-containing aqueous solution SW and the Li recovery aqueous solution AS (for example, lithium hydroxide (LiOH) aqueous solution) including after Li recovery. The processing tank 1 only needs to have a volume corresponding to required processing capacity, and its shape and the like are not particularly limited.

The electrolyte film 2 is an electrolyte that has lithium ion conductivity and does not conduct metal ions $M^{n+}$ other than $Li^+$ contained in the Li-containing aqueous solution SW, and preferably does not conduct electrons $e^-$. The metal ions $M^{n+}$ other than $Li^+$ are, for example, $Na^+$, $Mg^{2+}$, $Ca^{2+}$, and the like when the Li-containing aqueous solution SW is seawater. The electrolyte film 2 is more preferably an electrolyte made of ceramics having these properties, specifically, lithium lanthanum titanium oxide ($La_{2/3-x} Li_{3x}TiO_3$, also referred to as LLTO) or the like. Such an electrolyte film 2 has a certain proportion of lattice defects. The size of these lattice defect sites and the narrowest region (bottleneck) in an ion migration path are small. This prevents the electrolyte film 2 from conducting metal ions with a larger diameter than $Li^+$.

The first electrode 31 and the second electrode 32 are electrodes paired up with each other to apply a voltage between both surfaces of the electrolyte film 2. The first electrode 31 is provided in contact with the surface of the electrolyte film 2 on the supply tank 11 side. The second electrode 32 is provided in contact with the surface of the electrolyte film 2 on the recovery tank 12 side. The first electrode 31 is also paired up with a third electrode 33 to be described later to apply a voltage. The first electrode 31 and the second electrode 32 apply a voltage to a wide area of the electrolyte film 2 and each have a net-like porous structure that allows the Li-containing aqueous solution SW or the Li recovery aqueous solution AS to come into contact with a sufficient area of the surface of the electrolyte film 2.

The first electrode 31 is preferably formed of an electrode material that has catalytic activity and electron conductivity for the reaction of Formula (1) below and the reaction of Formula (2) below, and that is stable even when a voltage is applied in the Li-containing aqueous solution SW. The electrode material is more preferably a material that can be easily processed into the shape described above. The second electrode 32 is preferably formed of an electrode material that has catalytic activity and electron conductivity for the reaction of Formula (1) below and the reaction of Formula (4) below, and that is stable even when a voltage is applied in the Li recovery aqueous solution AS, including after Li recovery. The electrode material is more preferably a material that can be easily processed into the shape described above. The first electrode 31 and the second electrode 32 are each preferably made of platinum (Pt), for example. Formula (2) below shows a reaction where $Li^+$ in the aqueous solution (Li-containing aqueous solution SW) migrates into the electrolyte film 2. Formula (4) below shows a reaction where $Li^+$ in the electrolyte film 2 migrates into the aqueous solution (Li recovery aqueous solution AS).

[Chem. 2]

$$2OH^- \rightarrow H_2O + \frac{1}{2}O_2 \uparrow +2e^- \quad \cdots (1)$$

$$Li^+ \rightarrow Li^+(electrolyte) \quad \cdots (2)$$

$$Li^+(electrolyte) \rightarrow Li^+ \quad \cdots (4)$$

The third electrode 33 is an electrode for forming a potential lower than that of the surface of the electrolyte film 2 in the Li recovery aqueous solution AS. Therefore, it is preferable that the third electrode 33 is disposed in the recovery tank 12 so as not to contact the electrolyte film 2 and the second electrode 32, and is disposed parallel to the second electrode 32. To keep the voltage V2 of the second power supply 52 low, the third electrode 33 is preferably disposed close to the second electrode 32 to the extent that it does not short-circuit, as will be described later. It is also preferable that the third electrode 33 has a shape such as a mesh so as to increase the contact area with the Li recovery aqueous solution AS. The third electrode 33 is formed of an electrode material that has catalytic activity and electron conductivity for the reaction of Formula (3) below and is stable even when a voltage is applied in the Li recovery aqueous solution AS, including after Li recovery. The electrode material is preferably platinum (Pt). Alternatively, the third electrode 33 can be made of carbon (C), copper (Cu) or stainless steel, which is stable at a potential lower than the potential at which the reaction of Formula (3) below occurs, and the surface of these materials can be used as a catalyst. The third electrode 33 can be, more preferably, made of a material carrying Pt fine particles on the surface of such materials, which function as a catalyst.

[Chem. 3]

$$2H_2O+2e^- \rightarrow 2OH^- + H_2 \uparrow \dots \quad (3)$$

The first power supply 51 and the second power supply 52 are DC power supply units that apply predetermined voltages V1 and V2, respectively, and are connected in series with the first power supply 51 on the positive electrode side. The first power supply 51 has a positive electrode connected to the first electrode 31 and a negative electrode connected to the second electrode 32. The second power supply 52 has a positive electrode connected to the second electrode 32 and a negative electrode connected to the third electrode 33. In other words, a connection node 5n (see FIG. 2) between the first power supply 51 and the second power supply 52 connects to the second electrode 32. The first power supply 51 applies the voltage V1 between both surfaces of the electrolyte film 2 to generate a potential gradient for causing the electrolyte film 2 to conduct $Li^+$. The second power supply 52 applies the voltage V2 to form a potential lower than that of the surface of the electrolyte film 2 to the Li recovery aqueous solution AS, thereby suppressing conduction of electrons $e^-$ by the electrolyte film 2 from the recovery tank 12 side to the supply tank 11 side. The first power supply 51 and the second power supply 52 act as one power supply and apply a voltage (V1+V2) between the Li-containing aqueous solution SW and the Li recovery aqueous solution AS.

The heating device 6 is provided as necessary to bring the electrolyte film 2 to a predetermined temperature, and heats the electrolyte film 2 via the Li-containing aqueous solution SW or Li recovery aqueous solution AS. The heating device 6 can be a known heater that heats a liquid, and preferably has a temperature adjustment function. In this embodiment, the heating device 6 is of a throw-in type (immersion type) and is installed so as to be immersed in the Li recovery aqueous solution AS in the recovery tank 12. Therefore, a heating portion of the heating device 6 that is immersed in the Li recovery aqueous solution AS is made of a material that does not undergo deterioration such as corrosion even when coming into contact with the Li recovery aqueous solution AS, as with the processing tank 1. The heating device 6 only needs to be able to bring the electrolyte film 2 to a predetermined temperature, and does not need to keep the Li-containing aqueous solution SW or the Li recovery aqueous solution AS at a uniform temperature. However, depending on the volume of the processing tank 1 and the like, a stirring device may be provided. The temperature of the electrolyte film 2 may be at least the freezing point or lower than the boiling point of the aqueous solutions SW and AS, and is preferably a high temperature as described later.

The circulation device 7 is provided as necessary, and circulates the Li-containing aqueous solution SW between the outside and the supply tank 11. The circulation device 7 includes, for example, a pump, a filter for removing dust, and the like. When the Li-containing aqueous solution SW is seawater, hot spring water or the like, in particular, it is preferable to apply a voltage while circulating the Li-containing aqueous solution SW from these supply sources into the supply tank 11. With this method, the $Li^+$ concentration of the Li-containing aqueous solution SW is maintained almost constant even as $Li^+$ recovery progresses. The Li recovery rate is less likely to decrease even with a low-concentration Li aqueous solution, allowing for long time continuous operation. Alternatively, the circulation device 7 may replace the Li-containing aqueous solution SW in the supply tank 11 every predetermined period of operation. The lithium recovery device 10 may have a structure in which the supply tank 11 is opened to the outside (for example, into the seawater) through a filter or the like.

The Li-containing aqueous solution SW is a Li source and is an aqueous solution containing other metal ions $M^{n+}$ such as $Na^+$ and $Ca^{2+}$ in addition to lithium ions $Li^+$. Examples of such an aqueous solution include seawater, hot spring water, and an aqueous solution prepared by crushing a used lithium-ion secondary battery, dissolving it in acid, and then adjusting the pH.

The Li recovery aqueous solution AS is a solution for storing lithium ions $Li^+$ recovered from the Li-containing aqueous solution SW. To selectively obtain only Li from metals, the Li recovery aqueous solution AS is preferably an aqueous solution that does not contain metal ions (such as $Na^+$) other than lithium ions $Li^+$, and may be pure water. However, to ensure smooth $Li^+$ migration, the Li recovery aqueous solution AS is preferably an aqueous solution containing $Li^+$ (lithium hydroxide (LiOH) aqueous solution) at the start of recovery (at the start of power application).

[Lithium Recovery Method]

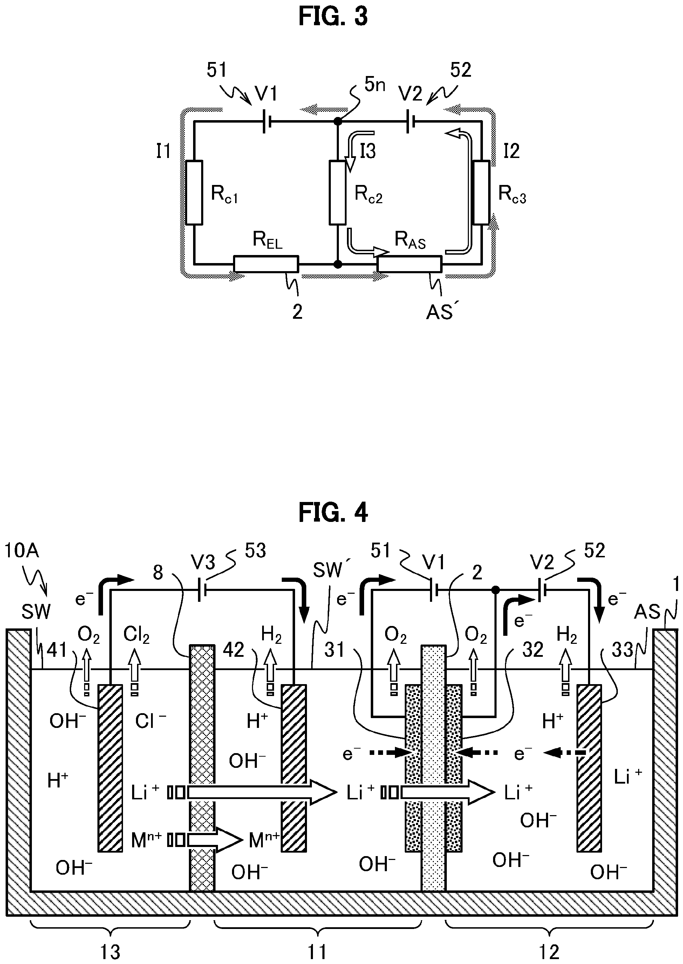

A lithium recovery method according to an embodiment of the present invention will be described with reference to FIGs. 2 and 3. The lithium recovery method according to this embodiment is performed as follows using the lithium recovery device 10 according to the embodiment shown in FIG. 1. FIG. 2 omits the heating device 6 and the circulation device 7.

In the lithium recovery device 10, the first power supply 51 and the second power supply 52, which are connected in series, can be considered as one power supply (referred to as the power supply 51-52). This power supply 51-52 applies a positive voltage (V1+V2), with respect to the third electrode 33, to the first electrode 31. Then, the following reaction occurs in the Li-containing aqueous solution SW in the supply tank 11. In the vicinity of the first electrode 31, hydroxide ions ($OH^-$) in the Li-containing aqueous solution SW cause the reaction of Formula (1) below, releasing electrons $e^-$ to generate water ($H_2O$) and oxygen ($O_2$) and emitting the electrons $e^-$ to the first electrode 31. The reaction of Formula (1) below may occur to generate ozone ($O_3$). When the Li-containing aqueous solution SW contains chloride ions ($Cl^-$), such as seawater, the reaction of Formula (5) below occurs, generating a gas corresponding to the type of anions contained in the Li-containing aqueous solution SW, such as emitting electrons $e^-$ to the first electrode 31 to generate chlorine ($Cl_2$). In the Li-containing aqueous solution SW, as $OH^-$ and other anions decrease, the reaction of Formula (2) below, where $Li^+$ in the Li-containing aqueous solution SW migrates into the electrolyte film 2, occurs near the electrolyte film 2, that is, near the first electrode 31 to maintain the charge balance.

[Chem. 4]

$$2OH^- \rightarrow H_2O + \frac{1}{2}O_2 \uparrow + 2e^- \quad \cdots (1)$$

$$2OH^- \rightarrow H_2O + \frac{1}{3}O_3 \uparrow + 2e^- \quad \cdots (1)$$

$$2Cl^- \rightarrow Cl_2 \uparrow + 2e^- \qquad \cdots (5)$$

$$Li^+ \rightarrow Li^+(electrolyte) \qquad \cdots (2)$$

Meanwhile, the following reaction occurs in the Li recovery aqueous solution AS in the recovery tank 12. In the vicinity of the third electrode 33, $H_2O$ in the Li recovery aqueous solution AS is supplied with electrons $e^-$, causing the reaction of Formula (3) below to generate hydrogen ($H_2$) and $OH^-$. At the same time, the second power supply 52 applies a positive voltage V2, with respect to the third electrode 33, to the second electrode 32. Then, in the vicinity of the second electrode 32, $OH^-$ in the Li recovery aqueous solution AS causes the reaction of Formula (1) below, emitting electrons $e^-$ to the second electrode 32 to generate $H_2O$ and $O_2$. This reaction is slower than the reaction of Formula (3) below near the third electrode 33, due to the difference in applied voltage. Therefore, in the Li recovery aqueous solution AS, $OH^-$ increases when the reaction of Formula (3) below and the reaction of Formula (1) below are combined. Accordingly, the reaction of Formula (4) below, where $Li^+$ in the electrolyte film 2 migrates, occurs near the surface of the electrolyte film 2, that is, near the second electrode 32 to maintain the charge balance. In the Li recovery aqueous solution AS, $H^+$ decrease due to the reaction of Formula (3) below near the third electrode 33 and excess cations due to the reaction of Formula (1) below and the reaction of Formula (4) below near the second electrode 32 cause charge imbalance. To solve this problem, Li$^+$ quickly migrates from the vicinity of the second electrode 32 to the vicinity of the third electrode 33.

[Chem. 5]

$$2H_2O + 2e^- \rightarrow 2OH^- + H_2 \uparrow \quad \cdots (3)$$

$$2OH^- \rightarrow H_2O + \frac{1}{2}O_2 \uparrow + 2e^- \quad \cdots (1)$$

$$Li^+(electrolyte) \rightarrow Li^+ \quad \quad \cdots (4)$$

From the reaction of Formula (2) to the reaction of Formula (4), that is, the infiltration of Li$^+$ in the Li-containing aqueous solution SW from the surface of the electrolyte film 2 to the inside thereof, the Li$^+$ migration in the electrolyte film 2, and the migration of Li$^+$ in the electrolyte film 2 into the Li recovery aqueous solution AS proceed as follows. The application of the voltage (V1+V2) by the power supply 51-52 causes the reaction of Formula (2) where Li$^+$ in the Li-containing aqueous solution SW burrows into lattice defect sites on the surface of the electrolyte film 2. The application of the voltage V1 by the first power supply 51 causes a potential gradient in the electrolyte film 2 where the potential of the surface on the opposite side (recovery tank 12 side) is low. Therefore, the Li$^+$ that has burrowed into the lattice defect site on the surface jumps (hops) to a lattice defect site near the deep side of the electrolyte film 2. Li+ thus keeps migrating from the lattice defect site of the electrolyte film 2 to the nearby lattice defect site. Finally, as the reaction of Formula (4), Li$^+$ migrates from the lattice defect site on the surface on the recovery tank 12 side into the Li recovery aqueous solution AS. As the Li$^+$ at the lattice defect site on the surface of the electrolyte film 2 on the supply tank 11 side migrates deep into the electrolyte film 2, other Li$^+$ adsorbed in the vicinity of an empty lattice defect site or Li$^+$ in the Li-containing aqueous solution SW burrows into the empty lattice defect site, and these Li$^+$ similarly migrate in the electrolyte film 2.

The application of the voltage V2 by the second power supply 52 causes a potential gradient in the Li recovery aqueous solution AS, where the vicinity of the surface of the electrolyte film 2 is positive and the vicinity of the third electrode 33 is negative. Li$^+$ is attracted to the vicinity of the third electrode 33, and the Li$^+$ concentration near the surface of the electrolyte film 2 decreases. This causes a large chemical potential difference, due to the Li$^+$ concentration gradient, between both surfaces of the electrolyte film 2, thus facilitating the Li$^+$ migration between the lattice defect sites in the electrolyte film 2.

The Li$^+$ migration in the electrolyte film 2 becomes faster as the potential gradient in the electrolyte film 2 becomes larger, that is, as the voltage V1 of the first power supply 51 becomes larger. The Li$^+$ migration in the electrolyte film 2 also becomes faster as the Li$^+$ concentration gradient in the electrolyte film 2 becomes larger. Therefore, the stronger the electric field between the second electrode 32 and the third electrode 33 in the Li recovery aqueous solution AS, that is, the larger the voltage V2 of the second power supply 52, the more easily the reaction of Formula (4) occurs, making it possible to quickly move Li$^+$ in the electrolyte film 2 to the Li recovery aqueous solution AS. Furthermore, the larger the voltage V1, the larger the difference in reaction rate between the reaction of Formula (3) and the reaction of Formula (1), increasing the rate of increase in OH$^-$ in the Li recovery aqueous solution AS. This increases the rate of the reaction of Formula (4), allowing Li$^+$ in the electrolyte film 2 to migrate into the Li recovery aqueous solution AS. The larger the voltage V1, the faster the reaction of Formula (1) in the Li-containing aqueous solution SW.

When the voltage V1, that is, the potential difference between both surfaces of the electrolyte film 2 is higher than or equal to a potential that causes some of the metal ions constituting the electrolyte film 2 to be reduced (for example, when the electrolyte film 2 is LLTO, Ti$^{4+}$+e$^- \rightarrow$ Ti$^{3+}$), the electrolyte film 2 can conduct electrons e$^-$ from the recovery tank 12 side to the supply tank 11 side. However, in the present invention, the second power supply 52 connected between the second electrode 32 and the third electrode 33 applies the voltage V2 to generate a suitable potential difference, with the second electrode 32 being positive with respect to the third electrode 33, in the Li recovery aqueous solution AS. Then, the electrons e$^-$ supplied from the third electrode 33 to the Li recovery aqueous solution AS migrate from the second electrode 32 connected to the surface of the electrolyte film 2 to the positive electrode of the second power supply 52. The potential of the second electrode 32, that is, the potential of the surface of the electrolyte film 2 on the recovery tank 12 side is thus maintained as high as the O$_2$ generation potential. Since the O$_2$ generation potential is higher than the reduction potential of the metal ions constituting the electrolyte film 2 (in the case of Ti, Ti$^{4+}$+e$^- \rightarrow$ Ti$^{3+}$; -0.488 V vs. SHE), the electrolyte film 2 does not conduct the electrons e$^-$ regardless of the potential difference between both surfaces thereof. Therefore, the voltage V1 can be set to a voltage higher than the applied voltage that causes the electrolyte film 2 to reach the reduction potential of at least one type of metal ions constituting the electrolyte film 2. In other words, when such a large voltage V1 is applied without applying the voltage V2, that is, in a lithium recovery device 100 shown in FIG. 10, the electrons e$^-$ are taken in from the surface of the electrolyte film 2 on the negative electrode side (recovery tank 12 side), thereby reducing the metal ions in the electrolyte film 2. This phenomenon easily occurs particularly with transition metal ions. However, in the present invention, as described above, due to the application of the voltage V2, the electrolyte film 2 does not reach the reduction potential of metal ions, and the electrolyte film 2 does not conduct the electrons e⁻.

Here, with reference numeral "AS'" representing a portion of the Li recovery aqueous solution AS sandwiched between the second electrode 32 and the third electrode 33, the lithium recovery device 10 according to this embodiment includes a closed circuit in which the second power supply 52, the first power supply 51, the electrolyte film 2, the Li recovery aqueous solution AS', and the second power supply 52 are connected in a loop in this order, as shown in FIG. 3. In this closed circuit (first circuit), the first and second power supplies 51 and 52 (power supply 51-52) connected in series supply currents I1 and I2 flowing counterclockwise as indicated by the dotted pattern arrows. I1 represents the current supplied from the first power supply 51, while I2 represents the current supplied from the second power supply 52. When the electrolyte film 2 does not exhibit electron conductivity, Li⁺ migrates in the opposite direction (in the same direction as the current I1) instead of the electrons e⁻. In the Li recovery aqueous solution AS', OH⁻ migrates instead of some of the electrons e⁻. In the lithium recovery device 10, the negative electrode of the first power supply 51 and the positive electrode (connection node 5n) of the second power supply 52 are connected to the electrolyte film 2 and the Li recovery aqueous solution AS' through the second electrode 32, respectively. Therefore, the lithium recovery device 10 further includes a closed circuit including the first power supply 51 and the electrolyte film 2, and a closed circuit including the second power supply 52 and the Li recovery aqueous solution AS'. The current can flow counterclockwise in one of these two closed circuits.

As described above, the lithium recovery device 10 moves the electrons e⁻ in the Li recovery aqueous solution AS from the second electrode 32 to the positive electrode of the second power supply 52. That is, currents I2 and I3 flow as indicated by void arrows in a closed circuit (second circuit) including the second power supply 52 and the Li recovery aqueous solution AS'. I3 represents the current branched from the current I2 (from the connection node 5n) and supplied to the second electrode 32. On the other hand, when the current flows from the second electrode 32 to the negative electrode of the first power supply 51, the reaction of Formula (3) occurs near the second electrode 32, generating H₂. The surface of the electrolyte film 2 on the recovery tank 12 side can thus reach the metal ion reduction potential. Therefore, in order to prevent the current from flowing in such a direction, in other words, to prevent the current from flowing from the positive electrode of the second power supply 52 to the second electrode 32 or to prevent the current from flowing between the second electrode 32 and the connection node 5n, that is, to satisfy I3 ≥ 0, the lithium recovery device 10 is configured as follows.

As for the current I3, I1 ≤ I2 since I1+I3= I2. $R_{EL}$ represents the resistance of the electrolyte film 2 (the resistance between the first electrode 31 and the second electrode 32). $R_{AS}$ represents the resistance of the Li recovery aqueous solution AS' (the resistance between the second electrode 32 and the third electrode 33). The lithium recovery device 10 further includes a reaction resistance $R_{c1}$ due to the reaction of Formula (1) ($O_2$ generation) and the reaction of Formula (5) ($Cl_2$ generation) in the first electrode 31, a reaction resistance $R_{c2}$ due to the reaction of Formula (1) ($O_2$ generation) in the second electrode 32, and a reaction resistance $R_{c3}$ due to the reaction of Formula (3) ($H_2$ generation) in the third electrode 33. Formula (6) below represents the first circuit, while Formula (7) below represents the second circuit. Here, resistances of the electrodes 31, 32, and 33 and wiring are ignored.

[Math. 1]

$$V1 + V2 = I1 \times (R_{EL} + R_{c1}) + I2 \times (R_{AS} + R_{c3}) \cdots (6)$$
$$V2 = I2 \times (R_{AS} + R_{c3}) + I3 \times R_{c2}$$
$$= I2 \times (R_{AS} + R_{c2} + R_{c3}) - I1 \times R_{c2} \cdots (7)$$

Formula (8) below is obtained from Formulas (6) and (7). The current I1 is expressed by Formula (9) below from Formula (8). The current I2 is expressed by Formula (10) below from Formula (7). Formula (11) below may hold true to satisfy I1 ≤ I2. Formula (12) below is obtained by solving Formula (11). Formula (13) below is obtained by substituting Formula (9) for I1 in Formula (10) below and solving for I2. Formula (14) below is obtained by substituting Formula (13) in Formula (12).

[Math. 2]

$$V1 = I1 \times (R_{EL} + R_{c1} + R_{c2}) - I2 \times R_{c2} \cdots (8)$$

$$I1 = \frac{V1 + I2 \times R_{c2}}{R_{EL} + R_{c1} + R_{c2}} \qquad \cdots (9)$$

$$I2 = \frac{V2 + I1 + R_{c2}}{R_{AS} + R_{c2} + R_{c3}} \qquad \cdots (10)$$

$$I2 \geq \frac{V1 + I2 \times R_{c2}}{R_{EL} + R_{c1} + R_{c2}} \qquad \cdots (11)$$

$$I2 \geq \frac{V1}{R_{EL} + R_{c1}} \qquad \cdots (12)$$

$$I2 \times [(R_{EL} + R_{c1}) \times (R_{AS} + R_{c2} + R_{c3}) + (R_{AS} + R_{c3}) \times R_{c2}]$$
$$= (R_{EL} + R_{c1} + R_{c2}) \times V2 + R_{c2} \times V1 \cdots (13)$$

$$V2 \geq \frac{R_{AS} + R_{c3}}{R_{EL} + R_{c1}} \times V1 \qquad \cdots (14)$$

From Formula (14), the voltage V2 of the second power supply 52 is set to be larger as the voltage V1 of the first power supply 51 becomes larger. To this end, the lithium recovery device 10 may connect ammeters in series (not shown) to the first power supply 51 and the second power supply 52, for example, and apply voltages V1 and V2 while measuring currents I1 and I2. The voltage V2 can also be set to be lower as the resistance $R_{As}$ between the second electrode 32 and the third electrode 33 and the reaction resistance $R_{c3}$ at the third electrode 33 are lower. The reaction resistance $R_{c3}$ is lower as the area of the third electrode 33 immersed in the Li recovery aqueous solution AS is larger and as the catalytic activity of the third electrode 33 for the reaction of Formula (3) increases. The resistance $R_{AS}$ is lower as the areas of the second electrode 32 and the third electrode 33 immersed in the Li recovery aqueous solution AS are wider and as the distance between them is shorter. The higher the electron conductivity of the Li recovery aqueous solution AS, the lower the resistance $R_{AS}$.

As described above, the stronger the electric field generated by the voltage V2, the larger the $Li^+$ concentration gradient in the electrolyte film 2 and the faster the $Li^+$ migration in the electrolyte film 2. However, as the voltage V2 becomes larger with respect to $(V1 \times (R_{AS}+R_{c3})/(R_{EL}+R_{c1}))$, the current I2 increases and the $O_2$ generation (reaction of Formula (1)) near the second electrode 32 and the $H_2$ generation (reaction of Formula (3)) near the third electrode 33 increase more than the $Li^+$ migration amount, resulting in energy efficiency degradation. On the other hand, even when the voltage V2 satisfies I1>I2 (I3<0), the electrolyte film 2 does not exhibit electron conductivity if the difference between I1 and I2 is sufficiently small. However, during the operation of the lithium recovery device 10, it is not easy to maintain the currents I1 and I2 constant because the resistance $R_{AS}$ decreases as the $Li^+$ concentration of the Li recovery aqueous solution AS increases, for example. Therefore, it is preferable that the voltage V2 is set to satisfy I1 < I2 as a margin. For example, at the start of operation of the lithium recovery device 10, the voltage V2 where I1= I2 is set to a value of more than or equal to 0.5 V, preferably more than 0 V, with a difference of less than or equal to 1 V or less than or equal to (V1/10).

In the present invention, in addition to the first power supply 51 that applies the voltage V1 between both surfaces of the electrolyte film 2, the second power supply 52 connected in series to the negative electrode of the first power supply 51 is provided. The third electrode 33 with a lower potential than the surface of the electrolyte film 2 is provided in the Li recovery aqueous solution AS. By setting this potential difference, that is, the voltage V2 of the second power supply 52 in accordance with the voltage V1, the electrons $e^-$ are hardly conducted in the electrolyte film 2 even when a large potential difference is generated between both surfaces of the electrolyte film 2 to reach the metal ion reduction potential. As a result, the recovery rate of $Li^+$ can be increased corresponding to the potential gradient in the electrolyte film 2. Similar to the lithium recovery method of the related art (see FIG. 10), since the first electrode 31 and the second electrode 32 are provided in contact with both surfaces of the electrolyte film 2, the first power supply 51 can efficiently form a potential gradient in the electrolyte film 2, thus accelerating the $Li^+$ migration in the electrolyte film 2. Furthermore, when the voltage V2 of the second power supply 52 is increased as the voltage V1 of the first power supply 51 is increased, a Li$^+$ concentration gradient can be efficiently formed in the electrolyte film 2, thus accelerating the Li$^+$ migration in the electrolyte film 2.

The Li$^+$ migration in the electrolyte film 2 becomes faster as the temperature becomes higher, besides the voltage V1. Therefore, it is preferable that the temperature of the electrolyte film 2 is high. The resistances $R_{EL}$, $R_{sw}$, and $R_{AS}$ of the electrolyte film 2 and the aqueous solutions SW and AS, as well as the reaction resistances $R_{c1}$, $R_{c2}$, and $R_{c3}$ at the electrodes 31, 32, and 33 are lower as the temperature is higher. The applicable temperature range is higher than or equal to the freezing point and below the boiling point of the aqueous solutions SW and AS, preferably higher than or equal to 20 °C.

(Modification)

When the Li-containing aqueous solution SW contains Cl$^-$, such as seawater, platinum chloride (PtCl$_2$) is formed on the surface of the first electrode 31 formed of Pt, impairing the high catalytic activity of Pt. As the electrode reaction overvoltage increases, the reaction rate of Formula (1) decreases. Therefore, when using seawater or the like as the Li source, the following configuration is adopted to prevent Cl$^-$ from contacting the first electrode 31. Hereinafter, a lithium recovery device and a lithium recovery method according to a modification of the embodiment of the present invention will be described with reference to FIG. 4. The same components as those in the embodiment (see FIGs. 1 to 3) are denoted by the same reference numerals, and descriptions thereof will be omitted as appropriate.

As shown in FIG. 4, a lithium recovery device 10A according to the modification of the embodiment of the present invention includes a processing tank 1, an electrolyte film (lithium ion-conducting electrolyte film) 2 and an ion exchange membrane 8 that partition the processing tank 1, a first electrode 31 and a second electrode 32 attached to each surface of the electrolyte film 2, a third electrode (sub-electrode) 33, an electrode 41, an electrode 42, a first power supply 51 and a second power supply 52 connected in series, and an ion migration power supply 53. The processing tank 1 is partitioned by the ion exchange membrane 8 and the electrolyte film 2 into three tanks, including a raw material tank, a supply tank (first tank) 11, and a recovery tank (second tank) 12 in this order. Specifically, the raw material tank 13 stores a Li-containing aqueous solution SW such as seawater. The supply tank 11 stores a Li-containing aqueous solution SW'. The recovery tank 12 stores a Li recovery aqueous solution AS. More specifically, the ion exchange membrane 8 partitions the raw material tank 13 and the supply tank 11, while the electrolyte film 2 partitions the supply tank 11 and the recovery tank 12. The electrodes 41 and 42 are provided facing the ion exchange membrane 8 in the raw material tank 13 and the supply tank 11, respectively. The ion migration power supply 53 is connected between the electrodes 41 and 42, with the electrode 42 provided on the recovery tank 12 side, that is, in the supply tank 11, as a negative electrode. Therefore, the lithium recovery device 10A according to this modification is different from the lithium recovery device 10 according to the embodiment shown in FIG. 1, in further including the ion exchange membrane 8 that partitions the processing tank 1 on the opposite side to the electrolyte film 2 on the supply tank 11 side, the electrodes 41 and 42 disposed with the ion exchange membrane 8 interposed therebetween, and the ion migration power supply 53 connected therebetween. In the lithium recovery device 10A, the Li-containing aqueous solution SW such as seawater is stored in the raw material tank 13.

The ion exchange membrane 8 conducts cations including at least Li$^+$. This prevents the Li-containing aqueous solution SW' in the supply tank 11 from containing anions such as Cl$^-$. The ion exchange membrane 8 can be a cation exchange membrane that passes cations and blocks anions, a monovalent cation permselective ion exchange membrane that passes monovalent cations only, such as Li$^+$, K$^+$, and Na$^+$, a bipolar monovalent ion permselective ion exchange membrane that passes monovalent ions, or the like. Known ion exchange membranes can be used. For example, SELEMION (registered trademark) CMV (manufactured by AGC Engineering Co., Ltd.), CMVN (manufactured by AGC Engineering Co., Ltd.), CMTN (manufactured by AGC Engineering Co., Ltd.), NEOSEPTA CSE (manufactured by Astom Co., Ltd.) can be used as the cation exchange membrane. SELEMION (registered trademark) CSO (manufactured by AGC Engineering Co., Ltd.) and CXP-S (manufactured by Astom Co., Ltd.) can be used as the monovalent cation permselective ion exchange membrane. NEOSEPTA CIMS (manufactured by Astom Co., Ltd.) can be used as the bipolar monovalent ion permselective ion exchange membrane.

The electrodes 41 and 42 are electrodes for applying a voltage between both surfaces of the ion exchange membrane 8 to generate a potential difference that is lower on the recovery tank 12 side, that is, higher on the raw material tank 13 side. As an example, the electrodes 41 and 42 can be disposed spaced apart from the ion exchange membrane 8, as shown in FIG. 4, so that the aqueous solutions SW and SW' can contact the entire surface of the ion exchange membrane 8. The electrodes 41 and 42 preferably have a net-like shape through which the aqueous solution passes, so that the aqueous solutions SW and SW' in contact with the surface of the ion exchange membrane 8 are continuously circulated in the tanks 13 and 11. The electrode 42 is disposed spaced apart from the first electrode 31 provided in the same supply tank 11. Therefore, the length of the supply tank 11 in the partitioning direction of the processing tank 1 (horizontal direction in FIG. 4), that is, the distance between the ion exchange membrane 8 and the electrolyte film 2 is set to a sufficient length. It is also preferable that the electrodes 41 and 42 are arranged parallel to each other. The electrode 41 is formed in the Li-containing aqueous solution SW and the electrode 42 is formed in the Li-containing aqueous solution SW', using an electrode material that is stable even when a voltage is applied, including after the operation of the lithium recovery device 10A (after Li recovery).

The ion migration power supply 53 is a DC power supply unit, which is connected between the electrodes 41 and 42 with the recovery tank 12 side as the negative side. The ion migration power supply 53 applies a voltage V3 to form a potential difference between both surfaces of the ion exchange membrane 8, where the potential is lower on the supply tank 11 side, thus causing metal ions contained in the Li-containing aqueous solution SW in the raw material tank 13 to migrate to the Li-containing aqueous solution SW' in the supply tank 11.

The Li-containing aqueous solution SW' is a solution that contains cations including $Li^+$ recovered from the Li-containing aqueous solution SW, and serves as a secondary Li source in the lithium recovery device 10A, and that removes anions other than $OH^-$, such as $Cl^-$ contained in the Li-containing aqueous solution SW. The Li-containing aqueous solution SW' is preferably an aqueous solution that does not contain anions other than $OH^-$, especially halide ions. The Li-containing aqueous solution SW' is, for example, pure water at the start of operation of the lithium recovery device 10A. Alternatively, to facilitate the migration of cations to the Li-containing aqueous solution SW' immediately after the start of operation, the Li-containing aqueous solution SW' may also be an aqueous solution in which $Li^+$ and $Na^+$, which are soluble metal ions, are dissolved, so as to have a somewhat high electron conductivity at the start of operation. That is, the Li-containing aqueous solution SW' is a lithium hydroxide (LiOH) aqueous solution or a sodium hydroxide (NaOH) aqueous solution, and is preferably a LiOH aqueous solution.

The lithium recovery device 10A further includes a heating device 6 and a circulation device (circulator) 7 as necessary (see FIG. 1). In the lithium recovery device 10A, the circulation device 7 circulates the Li-containing aqueous solution SW between the outside and the raw material tank 13. The lithium recovery device 10A may also have a structure in which the raw material tank 13 is opened to the outside (for example, into seawater) via a filter or the like.

A lithium recovery method using the lithium recovery device 10A according to this modification will be described with reference to FIG. 4. In this modification, while moving cations including $Li^+$ from the Li-containing aqueous solution SW in the raw material tank 13 to the Li-containing aqueous solution SW' in the supply tank 11, $Li^+$ are moved from the Li-containing aqueous solution SW' to the Li recovery aqueous solution AS in the recovery tank 12.

First, the ion migration power supply 53 applies a voltage V3 (+V3), which is positive with respect to the electrode 42, to the electrode 41. Then, $Li^+$ and other metal ions $M^{n+}$ in the Li-containing aqueous solution SW permeate through the ion exchange membrane 8 and migrate to the Li-containing aqueous solution SW'. Once a certain amount of $Li^+$ has migrated to the Li-containing aqueous solution SW', the first power supply 51 and the second power supply 52 start applying voltages V1 and V2. Then, the $Li^+$ that has migrated to the Li-containing aqueous solution SW' further migrate to the Li recovery aqueous solution AS in the recovery tank 12. The $Li^+$ migration from the Li-containing aqueous solution SW' in the supply tank 11 to the Li recovery aqueous solution AS in the recovery tank 12 is the same as that in the embodiment described above (see FIG. 2). In the lithium recovery device 10A according to this modification, the Li-containing aqueous solution SW' in contact with the first electrode 31 does not contain $Cl^-$ and the like. This prevents the catalytic activity of the first electrode 31 from being impaired by long-time operation. In this modification, it is preferable in terms of energy efficiency that only the ion migration power supply 53 is driven immediately after the start of operation to raise the $Li^+$ concentration of the Li-containing aqueous solution SW' to some extent, and then the drive of the power supplies 51 and 52 are started.

The larger the voltage V3 applied by the ion migration power supply 53, the stronger the electric field generated in the aqueous solutions SW and SW' between the electrodes 41 and 42, leading to an increase in migration amount of cations, including $Li^+$ contained in the Li-containing aqueous solution SW, per hour to the Li-containing aqueous solution SW'. When the $Li^+$ migration amount per hour is small, the $Li^+$ migration amount per hour from the Li-containing aqueous solution SW' to the Li recovery aqueous solution AS is limited. When the voltage V3 is larger than a certain value, on the other hand, the reaction of Formula (1) below occurs near the electrode 41 to generate $O_2$. When the Li-containing aqueous solution SW contains chloride ions ($Cl^-$), the reaction of Formula (5) below occurs to generate chlorine ($Cl_2$). At the same time, the reaction of Formula (3) below occurs near the electrode 42 to generate $H_2$. The energy efficiency decreases as the reaction amount of these reactions increases. It is thus preferable that the voltage V3 is as small as not to limit the $Li^+$ migration amount from the Li-containing aqueous solution SW' to the Li recovery aqueous solution AS. Alternatively, when $Li^+$ in the Li-containing aqueous solution SW' decreases to a predetermined concentration or less, the power supplies 51 and 52 may be stopped until a sufficient amount of $Li^+$ migrate from the Li-containing aqueous solution SW, and only the ion migration power supply 53 may be driven. The cation migration amount per hour is proportional to the area of the ion exchange membrane 8. Therefore, the area of the ion exchange membrane 8 may be set larger than that of the electrolyte film 2. To this end, the processing tank 1, for example, can be configured to have a shape including steps or slopes on its side surfaces (front and back surfaces in FIG. 4) and bottom surface in the supply tank 11 portion so that the cross section perpendicular to the partitioning direction in the tank is wider at the boundary between the raw material tank 13 and the supply tank 11 than at the boundary between the supply tank 11 and the recovery tank 12.

[Chem. 6]

$$2OH^- \rightarrow H_2O + \frac{1}{2}O_2 \uparrow + 2e^- \quad \cdots (1)$$

$$2Cl^- \rightarrow Cl_2 \uparrow + 2e^- \quad \cdots (5)$$

$$2H_2O + 2e^- \rightarrow 2OH^- + H_2 \uparrow \cdots (3)$$

The electric field generated by the voltage V3 becomes stronger with respect to the voltage V3 as the distance between the electrodes 41 and 42 and the ion exchange membrane 8 is shorter and as the electron conductivity of the aqueous solutions SW and SW' is higher. Therefore, by providing the electrodes 41 and 42 and using an aqueous solution containing ions at the start of operation as the Li-containing aqueous solution SW', the migration amount of cations including $Li^+$ per hour can be increased with respect to the voltage V3.

**EXAMPLE**

The lithium recovery device and the lithium recovery method according to the present invention have been described above based on the embodiments of the present invention. Hereinafter, examples in which the effects of the present invention have been confirmed will be described. It should be noted that the present invention is not limited to these examples and the above embodiments. It goes without saying that various changes and modifications based on these descriptions are also included in the spirit of the present invention.

With the lithium recovery device according to the embodiment of the present invention shown in FIG. 1, a lithium migration amount is measured when a voltage is applied for a certain period of time.

(Preparation of Lithium Recovery Device)

The lithium recovery device uses a 50 mm×50 mm, 0.5 mm thick plate-like $La_{0.57}Li_{0.29}TiO_3$ (lithium-ion conducting ceramic LLTO, produced by TOHO TITANIUM CO., LTD.) is used as an electrolyte film. In regions of 19.5 mm×20.5 mm in center portions of the respective surfaces of this electrolyte film, lattice-shaped electrodes each having a thickness of 10 μm, a width of 0.5 mm, and an interval of 0.5 mm are formed as a first electrode and a second electrode (porous structure electrodes). Moreover, leads for connecting the electrodes and the power supply are formed. The first electrode, the second electrode, and the leads are formed by screen-printing a Pt paste on the surfaces of the electrolyte film, followed by baking at 900 °C for 1 h. A 20 mm×20 mm Ni mesh electrode is used as a third electrode (sub-electrode). The electrolyte film on which the electrodes and the like are formed is set in a processing tank formed of acrylic plates to partition the processing tank into a supply tank and a recovery tank, and the third electrode is disposed so as to face the second electrode on the surface of the electrolyte film (distance between the third electrode and the electrolyte film: 50 mm). The processing tank is accommodated in a constant-temperature tank having a temperature adjustment function. Then, the first power supply is connected between the first and second electrodes with the first electrode as the positive electrode, the second power supply is connected in series to the negative electrode of the first power supply, and the negative electrode thereof is connected to the second electrode, thus obtaining the lithium recovery device. Furthermore, ammeters are inserted between the first power supply and the first electrode and between the second power supply and the first power supply and the third electrode (between the second power supply 52 and the connection node 5n in FIG. 2).

Into the supply tank and the recovery tank of the lithium recovery device, 150 ml of 1 mol/l lithium hydroxide aqueous solution is fed as a Li-containing aqueous solution and a Li recovery aqueous solution, such that the first electrode, the second electrode, and the third electrode are completely immersed. In addition, the same lithium hydroxide aqueous solution is accommodated as a replacement in a replenishment tank installed outside the processing tank of the lithium recovery device in the constant-temperature tank. Then, the solution temperature of the lithium hydroxide aqueous solution is adjusted to be the same as that of the lithium hydroxide aqueous solutions in the supply tank and the recovery tank.

(Lithium Recovery Experiment)

The first and second power supplies apply a DC voltage for 1 h. To suppress changes in the concentration of lithium hydroxide aqueous solution in the supply tank and recovery tank due to electrodialysis, the lithium hydroxide aqueous solution is fed into the supply tank and the recovery tank, respectively, at a constant rate using a liquid feed pump from the replenishment tank while applying the voltage. At the same time, the aqueous solution is pumped out at the same rate. After applying the voltage, the Li concentrations of the aqueous solution in the recovery tank and the aqueous solution pumped out from the recovery tank are measured using an inductively coupled plasma optical emission spectrometry (ICP-OES) device (Optima 7000DV, manufactured by PerkinElmer, Inc.), thus calculating the Li migration amount due to voltage application for 1 h. In addition, the power supply output P (= V1·I1+V2·I2) is calculated based on the currents (average value in 1 h) I1 and I2 measured with the ammeter upon voltage application.

The above experiment is conducted at a liquid temperature of 40 °C (= 313.15 K) with the voltage V2 of the second power supply fixed at 10 V while changing the voltage V1 of the first power supply from 2 V to 5 V in steps of 0.5 V. Similarly, the experiment is conducted at a liquid temperature of 40 °C with the voltage V1 of the first power supply fixed at 2 V and 5 V, respectively, while changing the voltage V2 of the second power supply from 5 V to 10 V in steps of 1.0 V. The experiment is also conducted with V1= 5 V and V2= 10 V while changing the liquid temperature from 0 °C to 50 °C.

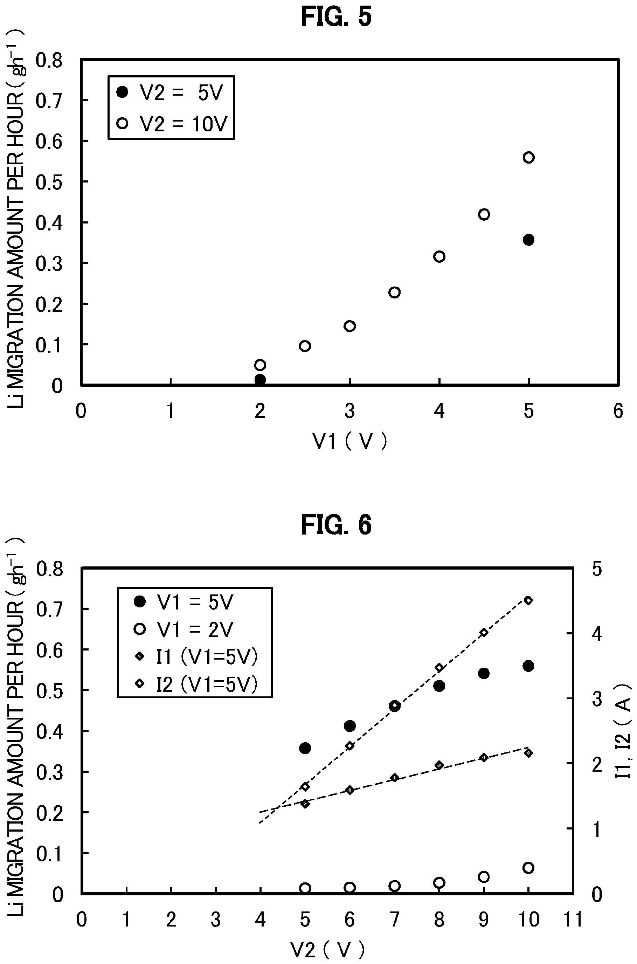

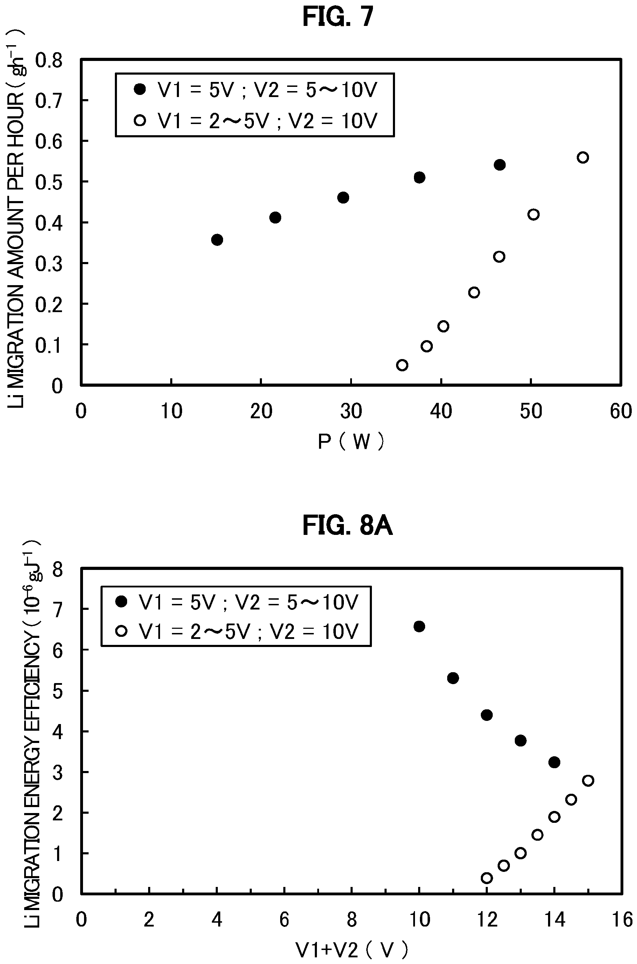

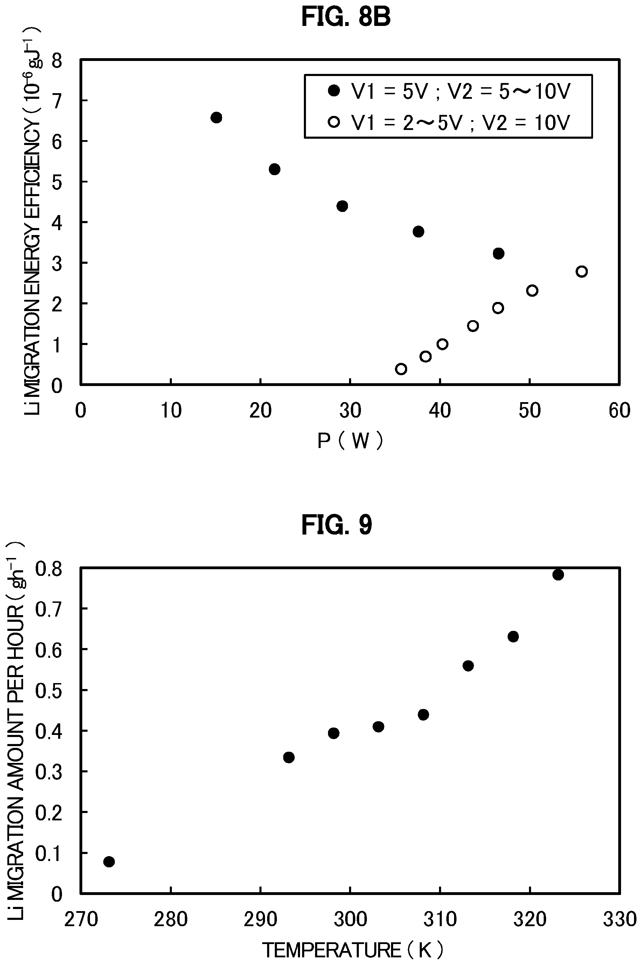

Graphs of the Li migration amount per hour are shown in FIG. 5 (voltage V1 dependence), FIG. 6 (voltage V2 dependence), and FIG. 7 (input power (power supply output) dependence). FIG. 6 also shows the dependence of the currents I1 and I2 on the voltage V2 when V1= 5 V. Furthermore, the Li migration amount per 1 J ((Li migration amount per hour/3600)/power supply output) is calculated as the energy efficiency of lithium recovery. FIG. 8A shows a graph of dependence of the total voltage (V1+V2) of the first power supply and the second power supply. FIG. 8B shows a graph of temperature dependence of the Li migration amount per hour.

(Preliminary Experiment)

The applied voltage is confirmed, at which the electrolyte film in the lithium recovery device according to this example exhibits electron conductivity. In the configuration shown in FIG. 10 with the second power supply and the third electrode removed from the lithium recovery device, the voltage V1 is applied for 1 h from the first power supply while exchanging the lithium hydroxide aqueous solutions in the supply tank and in the recovery tank, as in the experiment described above. The experiment is conducted with the liquid temperature of 40 °C while increasing the voltage V1 from 0.5 V in 0.5 V increments to 2.5 V at which the current I1 suddenly increases. The measured Li migration amount is almost 100 % of the Li migration amount based on the measured current I1, when the voltage V1 is 2.0 V or less, but decreases to about 30 % when the voltage V1 is 2.5 V. Therefore, it can be said in this example that the electrolyte film exhibits electron conductivity when the applied voltage between both surfaces thereof is more than 2.0 V and less than or equal to 2.5 V.

(Voltage Dependence)

As shown in FIG. 5, the Li+ migration amount per hour increases even when the potential difference increases beyond the potential difference that causes the electrolyte film to exhibit electron conductivity, as the voltage V1 applied between both surfaces of the electrolyte film is increased by applying the voltage V2 from the second power supply. As shown in FIG. 6, even when the voltage V2 is increased, the Li+ migration amount per hour increases. However, the Li+ migration amount per hour is significantly smaller when V1= 2 V than when V1= 5 V. As shown in FIG. 6, with V1= 5 V, I1<I2 when the voltage V2 is 5 V or more. However, when the currents I1 and I2 are linearly approximated as indicated by the dashed lines, I1<I2 is reversed to I1>I2 when the voltage V2 is around 4.4 V or less. It is presumed that, as the voltage V2 is further reduced, the electron conductivity of the electrolyte film emerges and the Li+ migration amount drastically decreases to the same extent as when V1= 2 V. By providing the second power supply and applying a sufficiently large voltage V2, the first power supply can apply a large voltage V1 between both surfaces of the electrolyte film, thus increasing the Li recovery rate.

As shown in FIG. 6, as the voltage V2 increases within the range of I1<I2, the current I2 increases sharply, thus increasing the power supply output. Therefore, as shown in FIG. 7, the Li+ migration amount per hour can be increased more efficiently by setting the voltage V1 larger than the voltage V2. Furthermore, as shown in FIGs. 8A and 8B, the energy efficiency of Li+ migration improves as the voltage V1 increases, but decreases as the voltage V2 increases. Therefore, it can be said that it is preferable that the voltage V2 is smaller within the range of I1<I2.

(Temperature Dependence)

As shown in FIG. 9, the higher the temperature, the larger the Li+ migration amount per hour. It can be therefore said that, by increasing the temperature of the electrolyte film, the Li+ migration speed in the electrolyte film can be increased, thus accelerating the Li recovery.

It is confirmed from the above that the lithium recovery device and the lithium recovery method according to the embodiment of the present invention realize faster Li recovery. Particularly, even when applying a high voltage that normally causes the electrolyte film to exhibit electron conductivity, the Li recovery can be accelerated without reducing the energy efficiency.

Reference Signs List

| | |
|---|---|
| 10, 10A | lithium recovery device |
| 1 | processing tank |
| 11 | supply tank (first tank) |
| 12 | recovery tank (second tank) |
| 2 | electrolyte film (lithium ion-conducting electrolyte film) |
| 31 | first electrode (porous-structure electrode) |
| 32 | second electrode (porous-structure electrode) |
| 33 | third electrode (sub-electrode) |
| 51 | first power supply |
| 52 | second power supply |
| 6 | heating device |
| 7 | circulation device (circulator) |
| AS | Li recovery aqueous solution |
| SW, SW' | Li-containing aqueous solution |

**Claims**

1. A lithium recovery device including a processing tank partitioned into a first tank and a second tank, in which lithium ions are moved from an aqueous solution containing lithium ions stored in the first tank to water or an aqueous solution stored in the second tank, comprising:

   a lithium ion-conducting electrolyte film that partitions the processing tank;
   porous-structure electrodes provided in contact with both surfaces of the lithium ion-conducting electrolyte film;
   a sub-electrode provided in the second tank so as to be spaced apart from the porous-structure electrodes and the lithium ion-conducting electrolyte film;
   a first power supply connected between the porous-structure electrodes with the first tank side as a positive electrode; and
   a second power supply which connects in series to a negative electrode of the first power supply and has a negative electrode connected to the sub-electrode, wherein
   upon voltage application from the first power supply and the second power supply, no current flows to the porous-structure electrode on the second tank side or a current flows from a positive electrode of the second power supply.

2. The lithium recovery device according to claim 1, wherein the voltage of the first power supply is higher than or equal to a voltage applied to the lithium ion-conducting electrolyte film to reach a reduction potential of at least one metal element contained in the lithium ion-conducting electrolyte film.

3. The lithium recovery device according to claim 1 or 2, further comprising:
   a heating device that heats the lithium ion-conducting electrolyte film.

4. The lithium recovery device according to any one of claims 1 to 3, further comprising:
   a circulator for circulating an aqueous solution containing lithium ions between the outside and the inside of the first tank.

5. A lithium recovery method for moving lithium ions, in a processing tank partitioned into a first tank and a second tank, from an aqueous solution containing lithium ions stored in the first tank to water or an aqueous solution stored in the second tank, wherein

   a voltage is applied by
   a first power supply connected between porous-structure electrodes, which are provided in contact with both surfaces of the lithium ion-conducting electrolyte film, with the first tank side as a positive electrode and

a second power supply which connects in series to a negative electrode of the first power supply and has a negative electrode connected to a sub-electrode provided in the second tank so as to be spaced apart from the lithium ion-conducting electrolyte film,

so that no current flows to the porous-structure electrode provided on the second tank side or a current flows from a positive electrode of the second power supply.

6. The lithium recovery method, according to claim 5, wherein the first power supply applies a voltage higher than or equal to a voltage applied to the lithium ion-conducting electrolyte film to reach a reduction potential of at least one metal element contained in the lithium ion-conducting electrolyte film.

# FIG. 1

# FIG. 2

# FIG. 3

# FIG. 4

# FIG. 5

# FIG. 6

## FIG. 7

## FIG. 8A

## FIG. 8B

## FIG. 9

## FIG. 10

## FIG. 11

**EP 4 338 821 A1**

# INTERNATIONAL SEARCH REPORT

| International application No. |
|---|
| **PCT/JP2022/020226** |

**A. CLASSIFICATION OF SUBJECT MATTER**

*B01D 61/44*(2006.01)i; *B01D 61/46*(2006.01)i; *C25B 7/00*(2006.01)i; *C02F 1/469*(2006.01)i; *C25B 13/04*(2021.01)i; *C25B 13/07*(2021.01)i; *C25B 9/00*(2021.01)i; *C25B 15/023*(2021.01)i; *C25B 15/08*(2006.01)i; *C25B 1/16*(2006.01)i
FI: B01D61/44 500; C02F1/469; B01D61/46 500; C25B1/16; C25B15/023; C25B15/08 302; C25B13/04 301; C25B13/07; C25B9/00 J; C25B7/00

According to International Patent Classification (IPC) or to both national classification and IPC

**B. FIELDS SEARCHED**

Minimum documentation searched (classification system followed by classification symbols)
B01D61/44; B01D61/46; C25B7/00; C02F1/469; C25B13/04; C25B13/07; C25B9/00; C25B15/023; C25B15/08; C25B1/16

Documentation searched other than minimum documentation to the extent that such documents are included in the fields searched
Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-141807 A (HIROSAKI UNIVERSITY) 29 August 2019 (2019-08-29) | 1-6 |
| A | JP 2019-141808 A (HIROSAKI UNIVERSITY) 29 August 2019 (2019-08-29) | 1-6 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **21 June 2022** | **28 June 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

23

INTERNATIONAL SEARCH REPORT
Information on patent family members

International application No.

**PCT/JP2022/020226**

| Patent document cited in search report | | | Publication date (day/month/year) | Patent family member(s) | Publication date (day/month/year) |
|---|---|---|---|---|---|
| JP | 2019-141807 | A | 29 August 2019 | (Family: none) | |
| JP | 2019-141808 | A | 29 August 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6233877 B

- JP 2019141807 A

**Non-patent literature cited in the description**

- **KUNUGI S ; INAGUMA Y. ; ITOH M.** Electrochemical recovery and isotope separation of lithium ion employing lithium ion conductive perovskite-type oxides. *Solid State Ionics,* July 1999, vol. 122 (1-4), 35-39